# EUROPÄISCHE PATENTSCHRIFT

(11) **EP 2 993 411 B1**
(45) Veröffentlichungstag und Bekanntmachung des Hinweises auf die Patenterteilung: **23.10.2019**
(21) Anmeldenummer: 15181897.8
(22) Anmeldetag: 21.08.2015
(51) Int. Cl.: F24C 7/08, G01K 1/14

(54) **SENSORSYSTEM FÜR EIN GARGERÄT**
SENSOR SYSTEM FOR A COOKING APPLIANCE
SYSTÊME CAPTEUR POUR UN APPAREIL DE CUISSON

(30) Priorität: 03.09.2014 DE 102014217630
(43) Veröffentlichungstag der Anmeldung: 09.03.2016
(73) Patentinhaber: BSH Hausgeräte GmbH, 81739 München (DE)
(72) Erfinder: Lappat, Hans, 84518 Garching a.d. Alz (DE); Mallinger, Peter, 83301 Traunreut (DE); Senf, Robert, 83301 Traunreut (DE)

(56) Entgegenhaltungen:
- DE-A1- 1 565 721
- DE-A1- 10 342 761
- DE-C1- 950 242
- DE-U1- 8 328 681
- US-A- 5 321 381
- US-A1- 2001 020 612

## Beschreibung

Die Erfindung betrifft ein Sensorsystem für ein Gargerät nach dem Anspruch 1 sowie ein Gargerät nach Anspruch 14. Herkömmliche Sensorvorrichtungen zur Ermittlung der Temperatur in Backöfen umfassen einen Sensor mit einem elektrischen Widerstand, welcher in ein Keramikrohr eingebettet ist. An einer Versorgungsleitung hängend, wird das Keramikrohr in ein Fühlerrohr eingeschoben und mittels Schrauben oder Klemmelementen fixiert. Nachteilig an den bekannten Lösungen ist, dass der Sensor relativ undefiniert im Fühlerrohr sitzt und durch Erschütterungen beim Transport oder Vibrationen über die Lebensdauer im Fühlerrohr wandern kann. Zudem sind heutige Sensorvorrichtungen nur sehr aufwendig zu demontieren. Ein Sensorsystem gemäß dem Oberbegriff des Anspruchs 1 ist von US 2001/0020612 bekannt.

Aufgabe der Erfindung ist es, bekannte Sensorsysteme zu verbessern. Eine mögliche Verbesserung ist es, die Positionierung des Sensors im Fühlerrohr zu verbessern und eine Demontage der Sensoren zu ermöglichen. Die Aufgabe wird erfindungsgemäß durch die Merkmale der unabhängigen Patentansprüche gelöst, während vorteilhafte Ausgestaltungen und Weiterbildungen der Erfindung den Unteransprüchen entnommen werden können.

Die Erfindung geht aus von einem Sensorsystem für ein Gargerät mit einem Befestigungselement zur Aufnahme eines Fühlerrohrs, indem ein Sensor sowie zumindest eine mit dem Sensor kontaktierte Versorgungsleitung angeordnet ist.

Es wird vorgeschlagen, dass der Sensor im Fühlerrohr mittels eines Federelements positioniert ist. Unter einem Sensorsystem für ein Gargerät soll insbesondere eine Baugruppe verstanden werden, welche geeignet ist, die Temperatur im Garraum eines Backofens zu erfassen und an eine nicht zum Sensorsystem gehörige Elektronik weiterzuleiten. Zum Sensorsystem zählt demnach auch ein Befestigungselement, wie z.B. ein Grillheizkörperflansch, der geeignet ist die Gesamtheit der Bauteile des Sensorsystems in Einbaulage zum Garraum zu positionieren. Dazu ist das Befestigungselement vorzugsweise an der Garraumrückwand angebracht. Unter einem Fühlerrohr soll insbesondere ein Gehäuse verstanden werden, welches derart ausgebildet ist, dass es den Sensor im Inneren aufnimmt und dem Garraum zuführt. Durch diese Anordnung ist sichergestellt, dass die im Garraum wirkende Temperatur an den Sensor weitergegeben wird, wobei der Sensor gleichzeitig vor Wrasen sowie Verschmutzung geschützt angeordnet ist. Unter einem Sensor soll insbesondere ein elektrischer Widerstand verstanden werden, der geeignet ist, elektrische Signale in Abhängigkeit einer auf ihn wirkenden Temperatur zu beeinflussen. Zudem besteht der Sensor aus einer zumeist keramisch ausgeführten Schutzhülle, welche die elektronischen Komponenten schützt, wobei der zwischen Widerstand und Keramikrohr entstehende Hohlraum zur besseren Leitfähigkeit mit Zement ausgefüllt ist. Unter einer Versorgungsleitung soll insbesondere eine elektrische Leitung verstanden werden, welche geeignet ist, Signale bzw. eine elektrische Spannung an den Sensor zu leiten und ein durch den Sensor generiertes Signal in Form einer Spannung an eine elektrische Komponente zu leiten. Unter einem Federelement soll insbesondere ein nicht starres Element verstanden werden, welches derart ausgebildet ist, den Sensor im Fühlerrohr derart zu positionieren, dass dieser stets an der bestmöglichen Position gehaltert ist und zudem zerstörungsfrei demontiert werden kann.

Vorzugsweise umgibt das Federelement den Sensor und/oder die Versorgungsleitung zumindest abschnittsweise spiralförmig. Unter spiralförmig soll insbesondere verstanden werden, dass das Federelement rotierend um den Sensor und/oder die Versorgungsleitung gewickelt ist. Alternativ dazu ist das Federelement bereits spiralförmig ausgebildet und der Sensor mit der angebrachten Versorgungsleitung wird in das Federelement eingeschoben. Dabei kann der Sensor bzw. das Keramikrohr als Anschlag in Einschubrichtung dienen. Vorteilhaft an dieser Ausgestaltung ist, dass ein derart umwickelter Sensor und/oder die Versorgungsleitung einen Knickschutz vor unbeabsichtigtem Abknicken der Versorgungsleitung sowie einen Kantenschutz vor scharfen Gehäuseabschnitten erhält.

Vorteilhafterweise ist das Federelement zumindest abschnittsweise aus einem federelastischen Element, wie z.B. Blech, Draht und/oder Kunststoff ausgebildet. Vorteilhafterweise halten diese Materialien den temperaturbedingten Anforderungen Stand.

Vorzugsweise weist das Fühlerrohr ein offenes Ende und ein geschlossenes Ende auf. Dieser Aufbau ermöglicht dem Fühlerrohr, dass es einerseits an seiner geschlossenen Seite gegenüber dem Garraum abgedichtet ist an und an seiner offenen Seite geeignet ist den Sensor sowie die Versorgungsleitung aufzunehmen. Das geschlossene Ende wir vorzugsweise mittels einer Quetschung des Fühlerrohrs erzeugt, kann alternativ aber auch verschweißt, verschraubt, oder ähnliches sein.

Erfindungsgemäß drückt das Federelement den Sensor in Einbaulage kraftbeaufschlagt in Richtung des geschlossenen Endes in das Fühlerrohr. Vorteilhaft an dieser Ausgestaltung ist, dass stets sichergestellt ist, dass der Temperaturfühler am Ende des Fühlerrohrs anliegt und seine Position über die Lebensdauer nicht verändert. Durch ein derartiges Federelement wird die Position auch dann sichergestellt, wenn eine Erschütterung beispielsweise durch den Transport auf das Sensorsystem einwirkt.

Vorzugsweise weist das Fühlerrohr einen Halteabschnitt auf. Unter einem Halteabschnitt soll insbesondere ein Durchbruch, eine Bohrung, ein Hinterschnitt oder eine ähnliche Verformungen des Fühlerrohrs verstanden werden, welche geeignet ist, einen Haltebereich auszubilden, indem ein im Wesentlichen hakenförmiges Element eingreifen kann. Eine bevorzugte Position des Halteabschnitts befindet sich im Bereich des offenen Endes am Fühlerrohr.

Vorzugsweise ist das Fühlerrohr mittels eines Schweiß- und/oder Press- und/oder Schraubverfahrens an dem Befestigungselement gehaltert. Durch diese oder ähnliche Fügeverfahren ist sichergestellt, dass das Fühlerrohr fest am Gargerät, insbesondere zum Garraum hin angeordnet ist. Ein bevorzugtes Befestigungselement ist der Grillheizkörperflansch, da dieser im Deckenbereich des Garraums angeordnet ist, und die Grillheizelemente trägt, welche unter anderem durch das Sensorsystem angesteuert werden.

Vorzugsweise ist das Fühlerrohr dampf- und/oder mikrowellendicht ausgeführt. Durch eine derartige Ausgestaltung des Fühlerrohrs ist ein Einsatz in einem Dampf- und/oder Mikrowellengerät möglich. Die Dichtheit gegenüber Dampf bzw. Mikrowellen wird durch das geschlossene Ende des Fühlerrohrs erzielt, wobei das geschlossene Ende vorzugsweise mittels einer Quetschung des Fühlerrohrs erzeugt ist. Alternativ zu einem rohrförmgien Halbzeug des Fühlerrohrs, ist auch jede weitere Halbzeugvariante bzw. jedes Herstellverfahren von der Erfindung umfasst, welches geeignet ist ein Gehäuseelement auszubilden. Mitunter ist auch ein durch einen Tiefziehprozess hergestelltes Fühlerrohr möglich.

Vorzugsweise ist am Federelement ein Halteelement ausgebildet. Das Halteelement befestigt das Federelement am Fühlerrohr, insbesondere am Halteabschnitt des Fühlerrohrs. Vorteilhafterweise ist das Halteelement hakenförmig aus dem Material des Federelements gebildet. Dieses bevorzugte Ausführungsbeispiel ermöglicht, dass das Federelement, welches den Sensor und die Versorgungsleitung trägt, in das Fühlerrohr eingeführt wird und in der Endposition mittels des Halteelements am Fühlerrohr fixierbar ist. Eine besonders gute Positionierung des Sensors im Fühlerrohr wird dadurch erzeugt, dass die Länge (L) des Federelements länger ist als der Innenbereich des Fühlerrohrs, so dass eine Art Vorspannung in Richtung der Einschubrichtung des Federelements in das Fühlerrohr entsteht, welches den Sensor kraftbeaufschlagt gegen das geschlossenen Ende des Fühlerrohrs presst.

Weitere Merkmale der Erfindung ergeben sich aus den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen, solange sie den Ansprüchen entsprechen. Es sind somit auch Ausführungsbeispiele von der Erfindung als umfasst und offenbart anzusehen, die in den schematischen Figuren nicht explizit gezeigt und erläutert sind, jedoch durch separierte Merkmalskombinationen aus den erläuterten Ausführungen hervorgehen und erzeugbar sind. Dabei zeigt:
- Fig. 1: eine schematische perspektivische Darstellung eines Ausführungsbeispiels des Sensorsystems im Garraum;
- Fig. 2: eine schematische perspektivische Darstellung eines Sensorsystems;
- Fig. 3: eine schematische perspektivische Darstellung eines Federelements; und
- Fig. 4: eine schematische perspektivische Darstellung eines Fühlerrohrs.

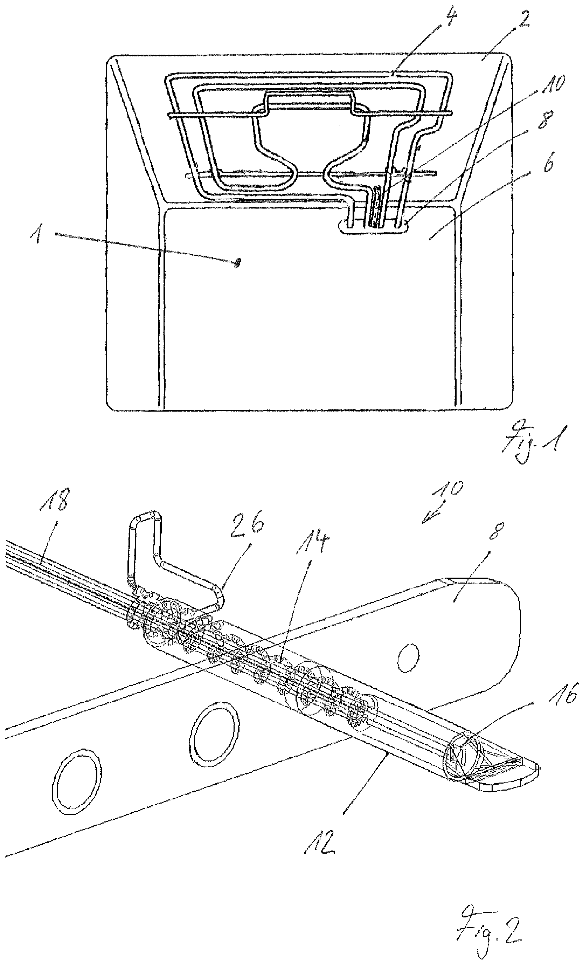

Ein nicht näher dargestellter an sich bekannter Backofen weist gemäß Fig. 1 einen frontseitig verschließbaren und im Wesentlichen quaderförmigen Garraum 1 auf, der frontseitig durch eine drehbar angelenkte Backofentür (nicht gezeigt) verschließbar ist. Unmittelbar unterhalb einer Deckwand 2 des Garraums 1 ist ein Strahlungsheizkörper 4 in Ausgestaltung eines Grillheizkörpers gehaltert, der sich nahezu über die gesamte Fläche der Deckwand 2 erstreckt. Zur Halterung des Strahlungsheizkörpers 4 dient ein an der Rückwand 6 des Garraums 1 angeordnetes Befestigungselement 8 in Ausgestaltung eines Grillheizkörperflansches. An dem Befestigungselement 8 ist zudem zumindest ein Sensorsystem 10 angeordnet. Das Sensorsystem 10 dient zur Aufnahme der Temperatur im Garraum 1 oder zur Aufnahme der Temperatur, welche vom Strahlungsheizkörper 5 abgegeben wird.

Fig. 2 zeigt das erfindungsgemäße Sensorsystem 10. Das Sensorsystem 10 besteht im Wesentlichen aus einem Befestigungselement 8, einem Fühlerrohr 12, einem Federelement 14, einem Sensor 16 und einer Versorgungsleitung 18. Dabei bilden das Befestigungselement 8 und das Fühlerrohr 12 eine im Wesentlichen starre Einheit, welche derart in dem Garraum ragt, das ein geschlossenes Ende 20 des Fühlerrohrs 12 in den Garraum 1 ragt. Ein offenes Ende 22 des Fühlerrohrs 12 ragt durch die Rückwand 6. Zur Montage des Sensors 16 mit seiner zumindest einen Versorgungsleitung 18 wird dieser vor dem Einschieben in das Fühlerrohr 12 in der Art mit dem Federelement 14 verbunden, das ein den Sensor 16 schützendes Keramikrohr 24 einen Anschlag bzw. Kragen bildet, von dem aus sich das Federelement spiralförmig um die Versorgungsleitung 18 erstreckt. Ein dem Sensor 16 gegenüberliegendes Ende des Federelements 14 weist dabei ein Halteelement 26 auf, mit dem das Federelement 14 am Fühlerrohr 12 befestigt ist. Dazu weist das Fühlerrohr 12 einen Halteabschnitt 28 auf, in den das Halteelement 26 korrespondierend eingreift.

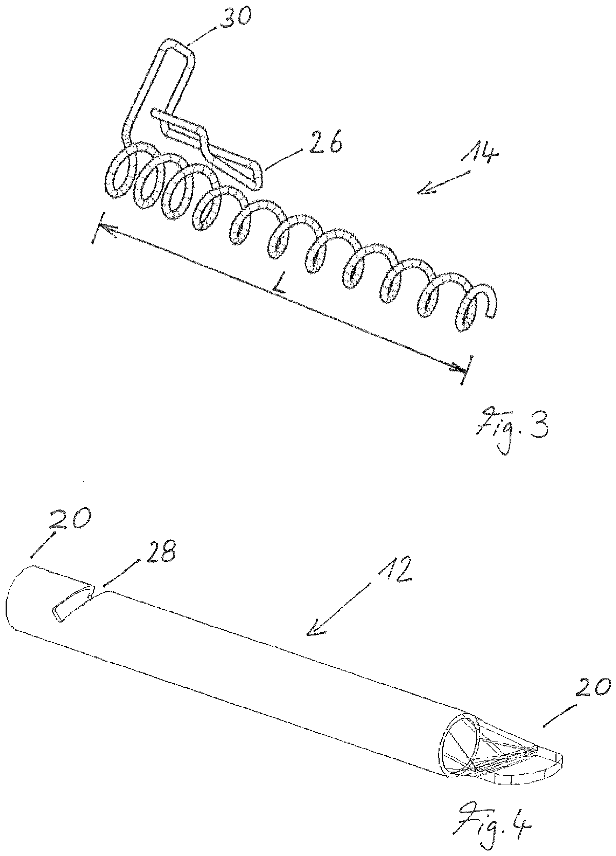

Fig. 3 zeigt das Federelement 14, welches im Wesentlichen aus einem ersten Abschnitt besteht, der sich spiralförmig erstreckt, wobei der Durchmesser des spiralförmigen Querschnitts ca. 1,5 mm ist. Das sich am spiralförmigen Abschnitt anschließende Halteelement 26 ist in der Art gebogen, dass durch Drücken mit dem Finger ein Betätigungselement 30, das Halteelement 26 aus dem Halteabschnitt 28 des Fühlerrohrs 12 gelenkt wird und somit das Federelement 14 dem Fühlerrohr 12 entnommen werden kann. Die Montage des Federelements erfolgt im Wesentlichen in umgekehrter Reihenfolge, wobei der spiralförmige Abschnitt des Federelements 14 linear zur Symmetrielinie des Fühlerrohrs 12 in das Fühlerrohr 12 eingeführt wird, bis der Anschlag des Halteelements 26 am offenen Ende 22 des Fühlerrohrs 12 erfolgt. Durch leichtes Drücken des federelastischen Betätigungselements 30 schwenkt das Halteelement 26 über den Außenradius des Fühlerrohrs 12. Nun kann das Federelement 14 weiter eingeschoben werden, bis der Sensor seine Einbaulage am geschlossenen Ende 20 erreicht. In dieser Position schnappt das Halteelement 26 federelastisch in den Halteabschnitt 28 des Fühlerrohrs 12 ein und hinterhakt. Die Länge (L) des Federelements 14 ist dabei so gewählt, dass in Einbaulage der Sensor 16 kraftbeaufschlagt gegen das geschlossene Ende 20 des Fühlerrohrs 12 gepresst wird.

Fig. 4 zeigt das Fühlerrohr 12, welches vorzugsweise aus Edelstahl gefertigt ist. Ein Ende des Fühlerrohrs 12 ist durch ein Prägeverfahren geschlossen, so dass das geschlossene Ende 20 des Fühlerrohrs 12 sowohl dampf- als auch mikrowellendicht ist. Das weiterhin offene Ende 22 des Fühlerrohrs 12 bildet den Einlass für das Federelement 14, welches den Sensor 16 sowie die Versorgungsleitung 18 trägt. Am Fühlerrohr 12 ist ein Halteabschnitt 28 ausgebildet, welcher zur Aufnahme des Halteelements 26 des Federelements 14 dient. In dem vorliegenden Ausführungsbeispiel ist der Halteabschnitt 28 durch einen schräg verlaufenden Sägeschnitt in das Fühlerrohr 12 eingebracht. Dieser Halteabschnitt kann alternativ als ein Durchbruch, eine Bohrung oder jede weitere Variante eines Hinterschnitts ausgebildet sein.

Für den Fachmann ist erkennbar, dass die beanspruchte Erfindung nicht auf das dargestellte Ausführungsbeispiel beschränkt ist, sondern dass eine Vielzahl von Varianten und Abwandlungen ebenfalls davon umfasst sind.

### BEZUGSZEICHENLISTE

- 1: Garraum
- 2: Deckwand
- 4: Strahlungsheizkörper
- 6: Rückwand
- 8: Befestigungselement
- 10: Sensorsystem
- 12: Fühlerrohr
- 14: Federelement
- 16: Sensor
- 18: Versorgungsleitung
- 20: geschlossenes Ende des Fühlerrohrs 12
- 22: offenes Ende des Fühlerrohrs 12
- 24: Keramikrohr
- 26: Halteelement
- 28: Halteabschnitt
- 30: Betätigungselement
- L: Länge des Federelements 14

## Patentansprüche

1. Sensorsystem für ein Gargerät mit einem Fühlerrohr (12) und einem Befestigungselement (8) zur Aufnahme des Fühlerrohrs (12), in dem ein Sensor (16) sowie zumindest eine mit dem Sensor (16) kontaktierte elektrische Versorgungsleitung (18) angeordnet ist, **dadurch gekennzeichnet, dass** der Sensor (16) im Fühlerrohr (12) durch ein Federelement (14) positioniert ist und das Federelement (14) den Sensor (16) in Einbaulage kraftbeaufschlagt in Richtung des geschlossenen Endes (20) in das Fühlerrohr (12) drückt.

2. Sensorsystem nach Anspruch 1, **dadurch gekennzeichnet, dass** das Federelement (14) den Sensor (16) und/oder die elektrische Versorgungsleitung (18) zumindest abschnittsweise spiralförmig umgibt.

3. Sensorsystem nach einem der vorangegangenen Ansprüche, **dadurch gekennzeichnet, dass** der Sensor (16) ein elektrischer Widerstand ist.

4. Sensorsystem nach einem der vorangegangenen Ansprüche, **dadurch gekennzeichnet, dass** das Federelement (14) zumindest abschnittsweise aus einem federelastischen Draht und/oder Kunststoff gebildet ist.

5. Sensorsystem nach einem der vorangegangenen Ansprüche, **dadurch gekennzeichnet, dass** das Fühlerrohr (12) ein geschlossenes Ende (20) und ein offenes Ende (22) aufweist.

6. Sensorsystem nach einem der vorangegangenen Ansprüche, **dadurch gekennzeichnet, dass** das Fühlerrohr (12) einen Halteabschnitt (28) zur Aufnahme eines Federelements (14) aufweist.

7. Sensorsystem nach Anspruch 6, **dadurch gekennzeichnet, dass** der Halteabschnitt (28) sich in einem Bereich des offenen Endes (22) befindet.

8. Sensorsystem nach einem der Ansprüche 6 oder 7, **dadurch gekennzeichnet, dass** das Federelement (14) einen Abschnitt aufweist, der ein Halteelement (26) zur Einführung in den Halteabschnitt (28) bildet.

9. Sensorsystem nach Anspruch 8, **dadurch gekennzeichnet, dass** das Halteelement (26) einen hakenförmigen Abschnitt des Federelements (14) bildet.

10. Sensorsystem nach einem der vorangegangenen Ansprüche, **dadurch gekennzeichnet, dass** eine Länge (L) des Federelements (14) länger ist als ein Innenbereich des Fühlerrohr (12).

11. Sensorsystem nach einem der vorangegangenen Ansprüche, **dadurch gekennzeichnet, dass** das Fühlerrohr (12) mittels eines Schweiß- und/oder Press- und/oder Schraubverfahrens an dem Befestigungselement (8) gehaltert ist, wobei das Befestigungselement (8) insbesondere als Grillheizkörperflansch ausgeführt ist.

12. Sensorsystem nach einem der vorangegangenen Ansprüche, **dadurch gekennzeichnet, dass** das Fühlerrohr (12) dampf- und/oder mikrowellendicht ausgeführt ist.

13. Sensorsystem nach einem der vorangegangenen Ansprüche, **dadurch gekennzeichnet, dass** am Federelement (14) ein Halteelement (26) ausgebildet ist, mit dem das Federelement (14) am Fühlerrohr (12), insbesondere am Halteabschnitt (28) des Fühlerrohrs (12) befestigt ist.

14. Gargerät, aufweisend ein Sensorsystem mit einem Befestigungselement (8) zur Aufnahme eines Fühlerrohrs (12), in dem ein Sensor (16) sowie zumindest eine mit dem Sensor (16) kontaktierte Versorgungsleitung (18) angeordnet ist, **dadurch gekennzeichnet, dass** das Sensorsystem ein Sensorsystem nach einem der vorangegangenen Ansprüche ist.

## Claims

1. Sensor system for a cooking appliance with a probe tube (12) and a fastening element (8) for accommodating the probe tube (12), in which a sensor (16) and also at least one electrical supply line (18) at least in contact with the sensor (16) are arranged, **characterised in that** the sensor (16) is positioned in the probe tube (12) by way of a spring element (14) and the spring element (14) presses the sensor (16) into the probe tube (12) through an application of force in the direction of the closed end (20) in the installed position.

2. Sensor system according to claim 1, **characterised in that** the spring element (14) surrounds the sensor (16) and/or the electrical supply line (18) in a helical manner, at least in sections.

3. Sensor system according to one of the preceding claims, **characterised in that** the sensor (16) is an electrical resistor.

4. Sensor system according to one of the preceding claims, **characterised in that** the spring element (14) is formed from a resilient wire and/or plastic, at least in sections.

5. Sensor system according to one of the preceding claims, **characterised in that** the probe tube (12) has a closed end (20) and an open end (22).

6. Sensor system according to one of the preceding claims, **characterised in that** the probe tube (12) has a retaining section (28) for accommodating a spring element (14).

7. Sensor system according to claim 6, **characterised in that** the retaining section (28) is situated in a region of the open end (22).

8. Sensor system according to one of claims 6 or 7, **characterised in that** the spring element (14) has a section which forms a retaining element (26) for introduction into the retaining section (28).

9. Sensor system according to claim 8, **characterised in that** the retaining element (26) forms a hook-shaped section of the spring element (14).

10. Sensor system according to one of the preceding claims, **characterised in that** a length (L) of the spring element (14) is longer than an inner region of the probe tube (12).

11. Sensor system according to one of the preceding claims, **characterised in that** the probe pipe (12) is retained on the fastening element (8) by means of a welding and/or pressing and/or screwing method, wherein the fastening element (8) is in particular designed as a grill heating element flange.

12. Sensor system according to one of the preceding claims, **characterised in that** the probe tube (12) is designed in a steam and/or microwave-sealed manner.

13. Sensor system according to one of the preceding claims, **characterised in that** a retaining element (26) is embodied on the spring element (14), by means of which retaining element (26) the spring element (14) is fastened to the probe tube (12), in particular to the retaining section (28) of the probe tube (12).

14. Cooking appliance, having a sensor system with a fastening element (8) for accommodating a probe tube (12), in which a sensor (16) and also at least one supply line (18) in contact with the sensor (16) is arranged, **characterised in that** the sensor system is a sensor system according to one of the preceding claims.

## Revendications

1. Système de capteur pour un appareil de cuisson, comprenant un tube de sonde (12) et un élément de fixation (8) destiné à loger le tube de sonde (12) dans lequel sont disposés un capteur (16) ainsi qu'au moins une ligne d'alimentation électrique (18) mise en contact avec le capteur (16), **caractérisé en ce que** le capteur (16) est positionné dans le tube de sonde (12) au moyen d'un élément de ressort (14) et **en ce que** l'élément de ressort (14), en position de montage, presse sous l'action d'une force le capteur (16) dans le tube de sonde (12) en direction de l'extrémité (20) fermée.

2. Système de capteur selon la revendication 1, **caractérisé en ce que** l'élément de ressort (14) entoure le capteur (16) et/ou la ligne d'alimentation électrique (18) de manière hélicoïdale au moins par endroits.

3. Système de capteur selon l'une quelconque des revendications précédentes, **caractérisé en ce que** le capteur (16) est une résistance électrique.

4. Système de capteur selon l'une quelconque des revendications précédentes, **caractérisé en ce que** l'élément de ressort (14) est formé au moins par endroits à partir d'un fil élastique et/ou de matière plastique.

5. Système de capteur selon l'une quelconque des revendications précédentes, **caractérisé en ce que** le tube de sonde (12) présente une extrémité fermée (20) et une extrémité ouverte (22).

6. Système de capteur selon l'une quelconque des revendications précédentes, **caractérisé en ce que** le tube de sonde (12) présente une section de maintien (28) pour le logement d'un élément de ressort (14).

7. Système de capteur selon la revendication 6, **caractérisé en ce que** la section de maintien (28) se trouve dans une zone de l'extrémité ouverte (22).

8. Système de capteur selon l'une des revendications 6 ou 7, **caractérisé en ce que** l'élément de ressort (14) présente une section qui forme un élément de maintien (26) pour l'introduction dans la section de maintien (28).

9. Système de capteur selon la revendication 8, **caractérisé en ce que** l'élément de maintien (26) forme une section, en forme de crochet, de l'élément de ressort (14).

10. Système de capteur selon l'une quelconque des revendications précédentes, **caractérisé en ce qu'**une longueur (L) de l'élément de ressort (14) est plus longue qu'une partie intérieure du tube de sonde (12).

11. Système de capteur selon l'une quelconque des revendications précédentes, **caractérisé en ce que** le tube de sonde (12) est fixé sur l'élément de fixation (8) au moyen d'un procédé de soudure et/ou de pressage et/ou de vissage, l'élément de fixation (8) étant notamment réalisé comme bride de corps de chauffe de grill.

12. Système de capteur selon l'une quelconque des revendications précédentes, **caractérisé en ce que** le tube de sonde (12) est réalisé de manière étanche à la vapeur et/ou aux microondes.

13. Système de capteur selon l'une quelconque des revendications précédentes, **caractérisé en ce qu'**un élément de maintien (26) est réalisé sur l'élément de ressort (14), au moyen duquel l'élément de ressort (14) est fixé sur le tube de sonde (12), notamment sur la section de maintien (28) du tube de sonde (12).

14. Appareil de cuisson présentant un système de capteur doté d'un élément de fixation (8) pour le logement d'un tube de sonde (12) dans lequel sont disposés un capteur (16) ainsi qu'au moins une ligne d'alimentation électrique (18) mise en contact avec le capteur (16), **caractérisé en ce que** le système de capteur est un système de capteur selon l'une quelconque des revendications précédentes.
